# EUROPÄISCHE PATENTANMELDUNG

(11) **EP 1 264 812 A2**
(43) Veröffentlichungstag der Anmeldung: **11.12.2002**
(21) Anmeldenummer: 02011903.8
(22) Anmeldetag: 29.05.2002
(51) Int. Cl.: C05G 3/00, C05G 5/00, C09D 175/06

(54) **Düngemittel mit verzögerter Freisetzung und Verfahren zu dessen Herstellung.**

(30) Priorität: 05.06.2001 DE 10127206
(71) Anmelder: COMPO GmbH & Co.KG, 48157 Münster (DE)
(72) Erfinder: Häberle, Karl, Dr., 67346 Speyer (DE); Raedle, Matthias, Prof. Dr., 67273 Weisenheim/Berg (DE); Geiger, Udo, 67258 Hessheim (DE); Horchier, Klaus, Dr., 67117 Limburgerhof (DE); Wissemeier, Alexander, Prof. Dr., 67346 Speyer (DE); Hähndel, Reinhardt, Dr., 67117 Limburgerhof (DE); Willkommen, Simone, 67549 Worms (DE)

(57) **Zusammenfassung**

Die vorliegende Erfindung betrifft ein Verfahren zur Herstellung von festen, Nährstoffe für Pflanzen enthaltenden Mitteln mit wenigsten einer biologisch abbaubaren Polymerschicht, die hergestellt wird, indem man Dispersionen, enthaltend Polymere, die Urethan- und Harnstoffgruppen aufweisen, zur oberflächigen Behandlung von festen, Nährstoffe für Pflanzen enthaltenden Mitteln einsetzt.

## Beschreibung

Die Erfindung betrifft ein Verfahren zur Herstellung von festen Nährstoffe für Pflanzen enthaltenden Mitteln, die mit einer biologisch abbaubaren Beschichtung versehen sind, sowie die nach diesem Verfahren hergestellten Mittel und deren Verwendung.

Es ist allgemein bekannt, als Düngemittel Düngemittelgranulate einzusetzen, die mit einer Polymerschicht umhüllt sind. Durch die Beschichtung wird die Effizienz dieser Düngemittel gesteigert, weil das beschichtete Düngemittel die den Pflanzen als Nährstoffe dienenden Stoffe zeitlich verzögert freisetzt und es so über einen langen Zeitraum seine Wirkung entfalten kann. Derartige Slow-Release-Düngemittel sind z.B. in Ullmann's Encyclopedia of Industrial Chemistry, 5. Aufl., 1987, Bd. A10, S. 363- 369 beschrieben und deren Vorteile sind in Fert. Res. von 1993, Bd. 35, S. 1 - 12 zusammengefasst.

In der Vergangenheit wurden zahlreiche mit biologisch abbaubaren Polymeren beschichtete Düngemittelgranulate beschrieben.

So betrifft die WO 95/03260 A1 ein Düngemittel mit einer aus zwei Schichten bestehenden Beschichtung. Dieses sowohl im Ackerbau als auch in der Hydrokultur verwendbare Düngemittel enthält eine innere Schicht, die biologisch abbaubar ist und aus einem aliphatischen Polyester und/oder Polyurethan aufgebaut ist, und eine wasserunlösliche äußere Schicht enthaltend langsam biologisch abbaubare Polymere, wie z.B. biologisch abbaubare Cellulosederivate, niedermolekulares Polyethylen, niedermolekulares Wachs und niedermolekulares Paraffin oder ein durch Licht abbaubares Harz. Die dort beschriebenen als äußere Schicht verwendeten Polymere weisen jedoch in der Regel eine nicht zu vernachlässigende Klebrigkeit auf, was sich bei der Anwendung dieser beschichteten Düngemittel als nachteilig erweist.

Die JP 07-309689 betrifft ein Düngemittel, das mit einer hauptsächlich aus einem Milchsäure-Polyester bestehenden Beschichtung versehen ist. Dabei wird angegeben, daß insbesondere ein Milchsäure-Copoplymer aus Milchsäure, einer Dicarbonsäure und einem Diol, das vorzugsweise aus Milchsäure, einer aliphatischen Dicarbonsäure, einer aromatischen Dicarbonsäure und einem Diol zusammengesetzt ist, eingesetzt wird. In der Beschreibung wird angegeben, daß der Gehalt an Milchsäure innerhalb des dort verwendeten Copolymers mindestens 50 Gew.-% beträgt.

Weitere mit biologisch abbaubaren Polymeren beschichtete Düngemittel sind in den japanischen Patentanmeldungen 08.2989, 07-315976, 08-26875, 07-33577 sowie 05-97561 beschrieben, wobei dort aliphatische Polyester, Poly(hydroxycarbonsäuren), Cellulose sowie Polymere, die eine dieser Komponenten als Hauptkomponente aufweisen, als Beschichtung verwendet werden.

Beschichtete Düngemittelgranulate, die mit einem Carboxylgruppen-tragenden Ethylencopolymerisat beschichtet sind, werden in der EP 832 053 B1 beschrieben.

Die EP 931 036 B1 beschreibt die Beschichtung von Düngemittelgranulat mit Dispersionen von Polyestern. Diese Polyester können auch mit Isocyanaten kettenverlängert werden, so daß es sich genauer gesagt um Polyester-Urethan-Dispersionen handelt.

Die nach dem Stand der Technik beschriebenen beschichteten Düngemittel weisen eine ganze Reihe von Nachteilen auf und bei ihrer Verarbeitung stößt man teilweise auf erhebliche technologische Schwierigkeiten.

So weisen einige der im Stand der Technik beschriebenen Umhüllungsmaterialien eine relativ hohe Klebrigkeit bei erhöhter Temperatur auf. Da viele der verwendeten Polymere als wässrige Dispersionen appliziert werden, muß wegen der leichten Wasserlöslichkeit der Düngemittelgranulate das Wasser möglichst rasch entfernt werden. Die hierfür wünschenswerte hohe Prozesstemperatur kann aber wegen der Klebrigkeit der Polymere oftmals nicht erreicht werden, wodurch die Anlagenkapazität eng begrenzt bleibt.

Die hohe Klebrigkeit an der Oberfläche der polymerbeschichtete Dünger ist ferner bei der Lagerung des ungeschützten polymerbeschichteten Produktes bei Raumtemperatur nachteilig. Außerdem müssen beschichtete Düngemittel den mechanischen Beanspruchungen standhalten können, die bei ihrer Anwendung auf sie einwirken können. Die Hüllen dürfen hierbei nicht beschädigt werden, da sie sonst unter Umständen ihre Wirksamkeit verlieren.

Aufgabe der vorliegenden Erfindung war es daher, ein Verfahren zur Verfügung zu stellen, mit dem sich Nährstoffe für Pflanzen enthaltende Mittel, vorzugsweise Düngemittel in Form von Granulaten, die mit wenigsten einer biologisch abbaubaren Polymerschicht beschichtet sind, herstellen lassen, die die beschriebenen Nachteile des Standes der Technik nicht mehr aufweisen. Insbesondere war es Aufgabe der vorliegenden Erfindung, Polymere zur Verfügung zu stellen, die sich ohne Verwendung von organischen Lösungsmitteln aufbringen lassen. Die beschichteten Düngemittel sollen zugleich eine ausreichende Langzeitwirkung und eine langsame Freisetzung der Nährstoffe gewährleisten. Weiterhin soll die Polymermenge, die zur Beschichtung benötigt wird, um eine ausreichende Retardwirkung zu erzielen, möglichst gering sein. Daneben sollen die beschichteten Mittel nicht zum Verkleben neigen, insbesondere bei Temperaturen, wie sie üblicherweise bei ihrer Lagerung oder beim Transport auftreten, ohne daß hierzu besondere Vorkehrungen erforderlich wären. Dies bedeutet jedoch, daß die beschichteten Mittel auch bei Temperaturen, die erheblich über Raumtemperatur (25°C) liegen, nahezu keine Klebrigkeit aufweisen dürfen.

Weiterhin dürfen die für die Beschichtung verwendeten Polymere keine zu große Härte und Sprödigkeit aufweisen, da die Beschichtung sonst bei mechanischer Beanspruchung der beschichteten Mittel, wie sie beispielsweise beim Umfüllen auftritt, beschädigt werden oder gar abplatzen kann. Schließlich sollen die Mittel den zunehmend höheren Anforderungen bezüglich einfacher und wirtschaftlicher Herstellbarkeit genügen.

Diese Aufgabe wird durch ein Verfahren gelöst, bei dem wenigstens eine Polymerschicht hergestellt wird, indem Dispersionen enthaltend Polymere, die Urethanund Harnstoffgruppen aufweisen, auf die festen Mittel aufgebracht werden.

Ferner betrifft die Erfindung feste Nährstoffe für Pflanzen enthaltende Mittel, die mit einer biologisch abbaubaren Polymerschicht beschichtet sind und nach dem genannten Verfahren hergestellt werden.

Unter festen Mitteln sind demgemäß in erster Linie Düngemittel zu verstehen; Erfindungsgemäß können jedoch alternativ oder zusätzlich noch andere Wirkstoffe zum Einsatz kommen, z.B. herbizid, biozid oder fungizid wirkende Stoffe.

Gegenstand der Erfindung ist demgemäß auch die Verwendung der beschichteten Mittel als Düngemittel für Pflanzen. Als Dispersionen sind erfindungsgemäß vorzugsweise in Wasser dispergierte Polymere zu verstehen. Besonders bevorzugt sind wässrige Dispersionen enthaltend 20 bis 90 Gew.-% Wasser, vorzugsweise 30 - 80 % und 10-80 Gew.-%, vorzugsweise 20 - 70 % Polymere, die Urethan- und Harnstoffgruppen aufweisen.

Zum Dispergieren des Polyurethans kann demgemäß vorzugsweise weitgehend oder vollständig auf organische Lösemittel verzichtet werden, so daß bei der Herstellung der erfindungsgemäßen Dispersionen die mit der Verwendung organischer Lösemittel einhergehenden Probleme, wie z.B. Toxizität, Entsorgung und Explosionsgefahr vermieden werden können.

Als Dispersionen, die Polymere mit Harnstoff und Urethangruppen aufweisen, kommen erfindungsgemäß vorzugsweise solche in Betracht, die auf Seite 2, Zeile 43 bis Seite 5, Zeile 63 der DE 198 254 53 A1 beschrieben sind.

Besonders bevorzugt sind erfindungsgemäß Polymer- Dispersionen auf der Basis von Polyesterpolyolen und Isocyanaten. Besonders bevorzugt sind Polymer- Dispersionen auf der Basis aliphatischer Isocyanate. Ganz besonders bevorzugt sind anionische Polymer- Dispersionen.

Höchst bevorzugt sind Polyurethandispersionen, die hergestellt werden, indem
a) aus Makroolen, ionischen oder potentiell ionischen Polyolen und überschüssigen Polyisocyanaten ein NCO-teminiertes Prepolymer hergestellt wird,
b) dieses Prepolymer mit Verbindungen, die mindestens 2 gegenüber Isocyanat reaktive Aminogruppen aufweisen, in einem Verhältnis NCO-Gruppen/NH-Gruppen von ≤ 1:1 umgesetzt
c) neutralisiert und
d) mit Wasser dispergiert wird.

Als Makroole werden solche Verbindungen eingesetzt, die ein Molekulargewicht von 500 bis 5000, vorzugsweise von 800 bis 4500, höchst bevorzugt von 800 bis 3000 aufweisen. Besonders bevorzugt ist der Einsatz von Makrodiolen.

Bei den Makroolen handelt es sich insbesondere um Polyesterpolyole, die z.B. aus Ullmanns Encyklopädie der technischen Chemie, 4. Auflage, Band 19, S. 62-65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und ggf., z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Alkenylbernsteinsäure, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als Diole kommen z.B. Ethylenglykol, Propan-1,2-diol, Propan-1,3-diol, Butan-1,3-diol, Butan-1,4-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol. Weiterhin bevorzugt sind Neopentylglykol und Pentandiol-1,5.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)z-COOH ableiten, wobei z eine Zahl von 1 bis 20 ist und ein H-Atom einer Methyleneinheit auch durch einen C₁- bis C₄-Alkylrest substituiert sein kann. Beispiele sind epsilon-Caprolacton, β-Propiolacton, γ-Butyrolacton und/oder Methyl-epsilon-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die chemisch äquivalenten Polykondensate der den Lactonen entsprechenden Hydroxycarbonsäuren, eingesetzt werden.

Daneben kommen als Monomere Polyetherole in Betracht. Sie sind insbesondere durch Polymerisation von Propylenoxid, Butylenoxid, Tetrahydrofuran, Styroloxid oder Epichlorhydrin mit sich selbst, z.B. in Gegenwart von BF₃ oder durch Anlagerung dieser Verbindungen ggf. im Gemisch oder nacheinander, an Startkomponenten mit reaktionsfähigen Wasserstoffatomen, wie Alkohole oder Amine, z.B. Wasser, Ethylenglykol, Propan-1,2-diol, 1,2-Bis-(4-hydroxyphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. α-ω-Dihydroxypolybutadien, α-ω-Dihydroxypolymethacrylester oder α-ω-Dihydroxypolyacrylester als Monomere. Solche Verbindungen sind beispielsweise aus der EP-A-0 622 378 bekannt. Weitere geeignete Polyole sind Polyacetale, Polysiloxane und Alkydharze.

Neben den genannten Makroolen können ggf. auch kurzkettige Polyole zugesetzt werden. Hierbei kommen beispielsweise kurzkettige Diole mit einem Molekulargewicht von 62 bis 500, insbesondere 62 bis 200 g/mol in Betracht.

Als kurzkettige Diole werden vor allem als Aufbaukomponenten die für die Herstellung von Polyesterpolyolen genannten kurzkettigen Alkandiole eingesetzt, wobei die unverzweigte Diole mit 2 bis 12 C-Atomen und einer gradzahligen Anzahl von C-Atomen sowie Pentan-1,5-diol bevorzugt werden. Außerdem kommen Phenole, aromatische Dihydroxy-Verbindungen oder Bisphenol A oder F als Diole in Betracht.

Als ionische oder potentiell ionische Polyole kommen erfindungsgemäß 2,2-Di-(hydroxymethyl)-Alkan-Monocarbonsäuren mit insgesamt bis zu 10 Kohlenstoffatomen in Betracht. Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen, vor allem, mit 3 bis 10 Kohlenstoffaromen, wie sie auch in der US-A 3 412 054 beschrieben sind. Insbesondere sind Verbindungen der allgemeinen Formel 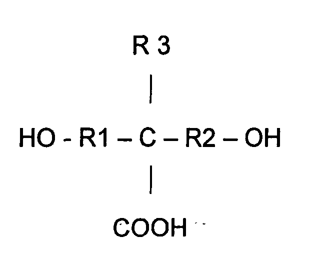 in welcher R¹ und R² für eine C₁- bis C₄- Alkandiyl-Einheit und R³ für eine C₁- bis C₄-Alkyl-Einheit steht geeignet. Besonders bevorzugt ist Dimethylolpropionsäure.

Als Polyisocyanate kommen erfindungsgemäß vorzugsweise die in der Polyurethanchemie üblicherweise eingesetzten Diisocyanate in Betracht.

Insbesondere zu nennen sind Diisocyanate X(NCO)₂ wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocylohexan, 1-lsocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4-Diisocyanato-diphenylmethan, 2,4-Diisocyanato-diphenylmethan, p-Xyxlylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomer sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4 Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4:1 bis 1:4 beträgt. Ganz besonders bevorzugt werden nur Isocyanate verwendet, die ausschließlich aliphatisch gebundene NCO-Gruppen tragen.

Als Polyisocyanate kann man auch Isocyanate einsetzen, die neben freien NCO-Gruppen weitere, von NCO-Gruppen abgeleitete Gruppen, wie z.B. Isocyanurat-, Biuret-, Harnstoff-, Allophanat-, Uretdion- oder Carbodiimidgruppen tragen.

Die beschriebenen Makroole, ionischen oder potentiell ionischen Polyole sowie Isocyanate und ggf. kurzkettigen Polyole werden zu einem NCO-terminierten Prepolymer umgesetzt. Hierbei werden vorzugsweise di-funktionelle Bausteine enthaltende Polyole verwendet. Das Verhältnis von NCO-Gruppen zu NCO-reaktiven Gruppen soll erfindungsgemäß zwischen 1,1:1 bis 2:1, vorzugsweise 1,15:1 bis 1,9:1, besonders bevorzugt 1,2:1 bis 1,5:1 liegen.

Dieses Prepolymer wird im Schritt b weiter umgesetzt. Als Reaktionskomponente können alle aliphatischen und/oder cycloaliphatischen Verbindungen verwendet werden, die mindestens zwei gegenüber Isocyanaten reaktive Aminogruppen tragen. Bevorzugt ist der Einsatz von Diamin. Hierfür in Frage kommen insbesondere Ethylendiamin, Propylendiamin, Hexamethylendiamin, Isophorondiamin (IPDA), p-Xylylendiamin, 4,4-Diamino-dicyclohexylmethan und 4,4-Diamino-3,3-dimethyldicyclohexylmethan.

Das Prepolymer wird mit den genannten Verbindungen vorzugsweise in einem NCO-Gruppen/NH-Gruppen-Verhältnis von 0,9:1 bis 1:1 umgesetzt. Besonders bevorzugt ist erfindungsgemäß ein Verhältnis von 0,95:1 bis 1:1, ganz besonders 1:1. Daraus folgt, daß der NCO-Gehalt nach Schritt b) 0, maximal 0,2 Gew.-% bezogen auf das Prepolymer ist.

Im Anschluß an die Umsetzung des Prepolymers erfolgt eine Neutralisierung. Hierfür sind z.B. Ammoniak, N-Methylmorpholin, Dimethylisopropanolamin, Triethylamin, Diemthylethanolamin, Methyldiethanolamin, Triethanolamin, Morpholin, Tripropylamin, Ethanolamin, Diethanolamin, Triisopropanolamin, N-Ethyl-diisopropylamin und Gemische daraus geeignet.

Besonders bevorzugt ist erfindungsgemäß der Einsatz von Ammoniak. Der Gehalt an COO⁻ NH₄⁺ nach der Neutralisierung soll erfindungsgemäß zwischen 100 und 600 mmol/kg, vorzugsweise 200 bis 500, besonders bevorzugt 250 bis 500 liegen.

Nach der Neutralisation wird mit Wasser dispergiert und ggf. Lösemittel abdestilliert. Durch die Zugabe von Wasser und das anschließende Entfernen des Lösemittels durch Destillation läßt sich insbesondere die gewünschte Festkörperkonzentration einstellen.

Die erfindungsgemäß eingesetzten Polyharnstoff- Polyurethan- Dispersionen können auch im Gemisch mit weiteren Substanzen vorliegen. Vorzugsweise enthalten die wäßrigen Dispersionen 10 bis 65, weiter bevorzugt 15 bis 50 Gew.-% des Polyurethans.

Den Dispersionen können zusätzliche Substanzen, die der Steuerung der Freisetzung der Düngemittel dienen, zugesetzt werden. Dies sind vor allem Substanzen wie Lignin, Stärke und Cellulose. Deren Mengen betragen im allgemeinen ungefähr 0,1 bis ungefähr 5 Gew.-%, vorzugsweise ungefähr 0,1 bis 3 Gew.-%, bezogen auf die Gesamtmenge des Beschichtungsstoffs.

Ferner können die erfindungsgemäß eingesetzten Polyharnstoff- Polyurethan-Dispersionen auch hydrophobe Hilfsmittel, andere Dispersionen oder andere Hilfsmittel enthalten. Hierfür kommen insbesondere die auf den Seiten 5 Zeile 64 bis Seite 7 Zeile 8 der DE 196 254 53 A1 beschriebenen Stoffe in Betracht. Vorzugsweise werden erfindungsgemäß jedoch die Polyharnstoff- Polyurethan- Dispersionen ohne Zusatz weiterer Polymerdispersionen eingesetzt.

Die erfindungsgemäßen Polyharnstoff- Polyurethan- Dispersionen können auch Spurenelemente enthalten. Hierfür kommen insbesondere die auf den Seite 2 Zeile 34 bis Zeile 36 der EP-380193 A2 beschriebenen Elemente in Betracht.

Ferner können die erfindungsgemäß eingesetzten Polyharnstoff-Polyurethan-Dispersionen auch Wirkstoffe enthalten. Vorzugsweise kommen hierbei solche in Betracht, die auf Seite 3, Zeile 17 bis 39 der EP-389193 A2 beschrieben sind.

Erfindungsgemäß können auf die Mittel eine oder mehrere Schichten aufgebracht werden. In einer Variante der Erfindung wird auf das Mittel mindestens eine innere Schicht und eine äußere Schicht aufgebracht, wobei vorzugsweise die äußere Schicht aus einer Dispersion hergestellt wird, die die beschriebenen Polyharnstoff-Polyurethane enthält. Als innere Schicht(en) können in einer Variante der Erfindung prinzipiell alle für Beschichtungen von Düngemitteln verwendbaren Substanzen, die verschieden von den erfindungsgemäß verwendeten Polyharnstoff-Polyurethan-Dispersion sind, eingesetzt werden. Vorzugsweise enthält die innere Schicht ebenfalls mindestens eine biologisch abbaubare Substanz, die jedoch verschieden von der in der äußeren Schicht eingesetzten Polyharnstoff- Polyurethan- Dispersion ist.

Das Aufbringen der Dispersionen erfolgt zweckmäßigerweise durch Aufsprühen. Die erfindungsgemäß verwendeten Dispersionen können für Beschichtungsverfahren bei erhöhter Prozeßtemperaturen eingesetzt werden. Die bei höheren Temperaturen wesentlich höheren Wasserdampfdrücke steigern die Kapazität einer Beschichtungsanlage erheblich. Vorzugsweise erfolgt das Beschichten bei einer Temperatur 10 bis 110°C, vorzugsweise 30 bis 70°C.

Um zu vermeiden, daß das erfindungsgemäße Mittel beim Aufbringen der wässrigen Dispersion angelöst wird, bringt man pro Zeiteinheit nur eine begrenzte Menge der Dispersionen auf und sorgt dafür, daß das Wasser rasch verdunsten kann.

Dies wird zweckmäßigerweise dadurch erreicht, daß man eine Wirbelschicht, die durch Aufwirbeln des Ausgangsdüngemittelgranulats mit einem Wirbelgas erzeugt wird, bei einer Temperatur von 10 bis 110°C, vorzugsweise 30 bis 70°C, mit den Dispersionen besprüht. Nach dem Aufsprühen der Lösungen bzw. Dispersionen wird die Wirbelschicht solange aufrechterhalten, bis das Dispergiermedium verdunstet ist.

Derartige Wirbelschicht-Auftragsverfahren sind allgemein bekannt und für die Herstellung von beschichteten Düngemittelgranulaten in der US-A-5 211 985 beschrieben. Mit diesem Verfahren lassen sich besonders gleichmäßige und dünne Beschichtungen erzeugen, die im allgemeinen eine Dicke von ungefähr 10 bis ungefähr 150 µm, vorzugsweise ungefähr 10 bis ungefähr 100 und insbesondere ungefähr 20 bis ungefähr 80 µm aufweisen.

Um die Neigung der beschichteten Mittel zum Verkleben und Verbacken zusätzlich zu verringern, bringt man ggf. im Anschluß an die Beschichtung vorteilhafterweise pulverförmige Feststoffe wie Talkum, SiO₂, Al₂O₃, oder TiO₂ auf.
Die erfindungsgemäß beschichteten Mittel werden ggf. zusammen mit Nitrifikationsinhibitoren oder Wachstumsregulatoren nach üblichen Verfahren auf den Boden gebracht, wo sie die Nährstoffe über einen längeren Zeitraum hinweg freisetzen. Die Mittel zeichnen sich insbesondere dadurch aus, daß sie selbst bei erhöhter Temperatur vergleichsweise wenig zum Verkleben und Verbacken neigen und ihre Hülle unempfindlich gegen mechanische Beanspruchungen ist, wie sie typischerweise beim Umfüllen und Transport oder bei der Anwendung auftreten.

Im folgenden soll die vorliegende Erfindung anhand einiger Beispiele erläutert werden:

### 1. Synthese einer Polyharnstoff-Polyurethan-Dispersion

In einem Rührkolben werden vorgelegt:
800 g (0,4 mol) eines Polyesterpolyols aus Isophthalsäure, Adipinsäure und Hexandiol- 1,6 der OH-Zahl 56 mg/g,
80,4 g (0,60 mol) DMPA und
36,0 g (0,40 mol) Butandiol-1,4.

Dazu gibt man bei 105°C
400 g (1,80 mol) IPDI und
160 g Aceton.

Nach vier Stunden rühren bei 105°C wird mit
1600 g Aceton
verdünnt.
Der NCO-Gehalt der Lösung wird zu 1,11% bestimmt (berechnet: 1,08%).

Die Lösung wird auf 45°C gekühlt und mit
68,0 g (0,40 mol) IPDA versetzt.

Nach 90 Minuten wird mit
50,0 g (0,73 mol) 25%igen wäßrigem Ammoniak neutralisiert, mit
3000 g Wasser dispergiert und das Aceton i.V. abgezogen.

### 2. Eigenschaften der Beschichtungsmaterialien

Die Eigenschaften der Beschichtungsmaterialien lassen sich in Modellversuchen abbilden. So kann man Filme einer definierten Stärke aus der wässrigen Dispersion der Beschichtungsmaterialien gießen, das Wasser abtrocknen und erhält eine Folie. Diese Folie läßt sich auf mechanische Eigenschaften untersuchen. Die erfindungsgemäßen Materialien aus biologisch abbaubarem Polyharnstoff-Polyurethan zeigen gegenüber dem Stand der Technik eine wesentliche Verbesserung hinsichtlich der Eigenschaften der Reißfestigkeit, Elastizität und Stabilität bei Wasserlagerung. Dies ist in Tabelle 1 dargestellt.

### Tabelle 1: Reißfestigkeit von Filmen mit 50 µm Dicke

Vergleichsmaterial gem. EP 0931036 4,8 MPa
Erfindungsgemäßes Polyurethan 12 MPA

### Elastizität bei Dehnung

Vergleichsmaterial gem. EP 931 036 70 %
Erfindungsgemäßes Polyurethan 120 %

### Zerfließen bei Wasserlagerung (Größenzunahme einer Folie)

Vergleichsmaterial gem. EP 931 036 240 %
Erfindungsgemäßes Polyurethan 0 %

### 3. Herstellung von beschichteten Düngemittelgranulaten

In einem handelsüblichen Wirbelbettcoater wurden die Düngemittelausgangsgranulate Nitrophoska® Perfekt (15+5+20+2) mit vorgewärmter Luft fluidisiert und auf die gewünschte Temperatur erwärmt. Durch entsprechende Düsen wurden jeweils wässrige Polyharnstoff-Polyurethan-Dispersionen aufgedüst und dadurch die Düngemittelausgangsgranulate mit einer Beschichtung des Polyharnstoff-Polyurethans überzogen. Die Sprührate wurde dabei so gewählt, daß ein Anlösen des Düngers vermieden wurde. Nach Beendigung des Aufsprühens wurde das erhaltende beschichtete Düngemittelgranulat noch einige Minuten im Wirbelbett getrocknet. Dabei wurden beschichtete Düngemittelgranulate erhalten, die eine gute Verarbeitbarkeit aufwiesen und bei Umgebungstemperatur keine Klebrigkeit besaßen.

### 4. Eigenschaften der beschichteten Granulate

### a) Nährstofffreisetzung unter Laborbedingungen

Zur Charakterisierung der Nährstofffreisetzung wurden die beschichteten Düngemittelgranulate einem Auslaugtest unterzogen. Hierbei wurde eine Probe des zu untersuchenden beschichteten Düngemittelgranulats ( 50g ) in eine U-förmige Glasvorrichtung gegeben und diese anschließend täglich mit 1500 ml destillierten Wasser bei 20°C gleichmäßig durchgespült. Die aufgefangene Spülflüssigkeit wurde täglich auf ihren Nährstoffgehalt (meist nur Stickstoff) untersucht, das Ergebnis zu der im Düngemittelausgangsgranulat vorhandenen Nährstoffmenge ins Verhältnis gesetzt und als Prozentzahl ausgedrückt. Die Ergebnisse der über mehrere Tage hinweg durchgeführten Untersuchungen sind zusammen mit einigen Vergleichswerten in der Tabelle zusammengefasst.

**Tabelle:**

| Stickstofffreisetzung aus umhüllten Düngern im Labortest | | | | |
|---|---|---|---|---|
| | 4% erfindungsgemäßes Polyurethan | 4% Vergleichsmaterial gem. EP931036 | 6% Erfindungsgemäßes Polyurethan | 6% Vergleichsmaterial gem. EP931036 |
| 1. Tag | 15,4% | 50,6% | 2,1% | 4,6% |
| 2. Tag | 29,4% | 55,2% | 3,9% | 8,6% |
| 3. Tag | 41,1% | 57,9% | 5,3% | 14,7% |
| 4. Tag | 51,1% | 59,9% | 6,8% | 22,1% |
| 5. Tag | 58,4% | 61,6% | 9,1% | 28,3% |
| 6. Tag | 63,9% | 63,7% | 11,8% | 34,7% |
| 7. Tag | 68,8% | 66,0% | 14,4% | 39,2% |

### b) Retardierende Wirkung im pflanzenbaulichen Test

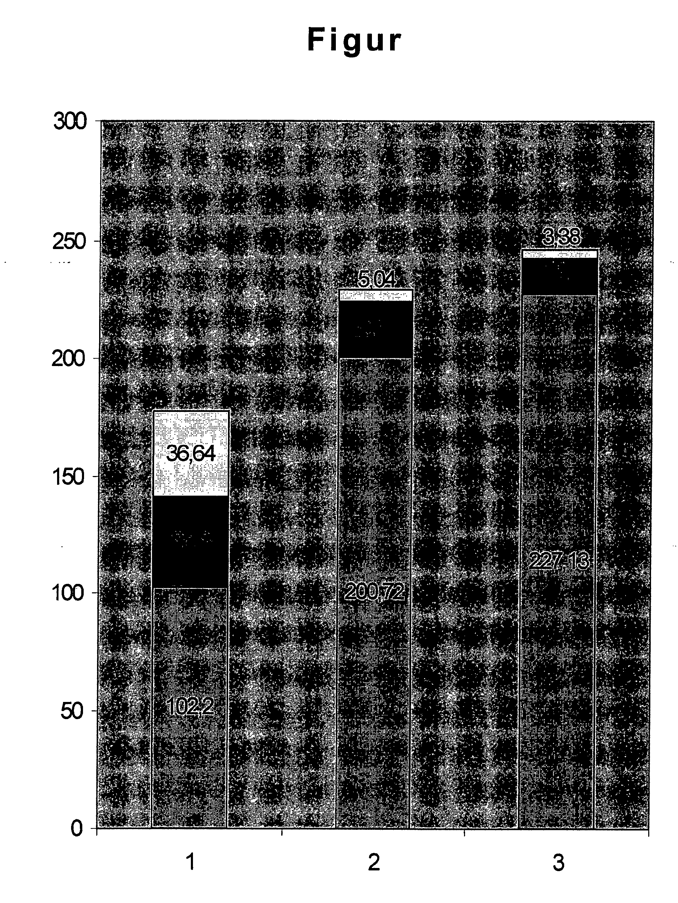

Beschichtete Düngemittel sollen eine Langzeitwirkung und eine langsame Freisetzung der Nährstoffe gewährleisten. Im Pflanzenversuch läßt sich darstellen, wie eine Retardierung in Abhängigkeit der aufgebrachten Beschichtungsmenge sich verhält. Diese Langzeitwirkung kann beispielsweise gezeigt werden, indem Kulturpflanzen, wie z.B. Chinakohl, zu Kulturbeginn gedüngt werden und dann aufwachsen. Nach Ende der Wachstumsperiode werden sie geschnitten und das Frischgewicht bestimmt. Geringes Frischgewicht bedeutet eine stärkere Retardierung des eingesetzten Düngemittels. Da die Langzeitwirkung bei guten beschichteten Düngemitteln länger als die Kulturzeit des Chinakohls ist, wird in das gleiche Gefäß ohne Nachdüngung nach Ernte der ersten Pflanze eine zweite eingesetzt. Auch sie kann mit den vorhandenen Düngemitteln wachsen. Diese Prozedur kann bis zu vier Mal wiederholt werden. Dadurch wird die Freisetzungscharakteristik geprüft über einen Zeitraum, der einer sehr langen Kulturzeit entsprechen kann. Aus der Figur ersieht man, daß eine ähnliche Retardierung erreicht werden kann, wenn für die Beschichtung auf Basis des erfindungsgemäß zu verwendeten Polyharnstoff-Polyurethans 3 % Beschichtungsmaterial verwendet wird (Säule 3), wie wenn 6 % eines Vergleichsmaterials gem. EP 931 036 zur Beschichtung verwendet werden (Säule 2). Mit 6% des erfindungsgemäßen Hüllmaterials (Säule 1) ist die Retardierung merklich stärker als beim Vergleich. Gegenüber dem Stand der Technik bedeutet die Verwendung des neuen Beschichtungsmaterials also einen wesentlichen Fortschritt.
Legende zur Figur (Ertrag von Chinakohl über 3 Aufwüchse mit verschiedenen umhüllten Düngern):
- die Y-Achse gibt das Frischgewicht in g/Kohlkopf auf einer Skala von 0 bis 300 an
- Trägerdünger ist in allen Fällen Nitrophoska
- helldunkler Säulenbereich: 1. Aufwuchs
- dunkler Säulenbereich: 2. Aufwuchs
- heller Säulenbereich: 3. Aufwuchs

### c) Verklebungsneigung der Düngemittel

Beschichtete Düngemittel gem. EP 931 036 weisen eine hohe Klebrigkeit an der Oberfläche auf. Eine Lagerung des ungeschützten beschichteten Produktes bei Raumtemperatur ist nicht möglich. Zur Qualifizierung dieser Backneigung wird im Düngemittelbereich ein sogenannter Backtest durchgeführt. Dabei wird einer Probe von 100 g Düngemittel in einem zylindrischen Gefäß mit 5 cm Durchmesser in einer Zentrifuge über 24 Stunden verpresst. Danach wird die Kraft gemessen, die man benötigt, um den entstehenden Zylinder wieder abzuscheren. Die notwendige Abschlagskraft beträgt bei nach EP 931 036 beschichteten Düngern 400 Newton, bei erfindungsgemäß beschichteten Düngern ca. 40 Newton. Diese Zahlen zeigen, daß eine Lagerung des Vergleichsmaterials ohne Antibackmittel nicht möglich ist. Sehr wohl ist die jedoch möglich bei den erfindungsgemäßen Polyharnstoff-polyurethan beschichteten Düngemitteln.

## Patentansprüche

1. Verfahren zur Herstellung von mit festen, Wirkstoffe für Pflanzen enthaltenden Mitteln, die mit wenigstens einer biologisch abbaubaren Polymerschicht beschichtet sind, **dadurch gekennzeichnet, daß** die Polymerschicht hergestellt wird, indem Dispersionen, enthaltend Polymere, die Urethan- und Harnstoffgruppen aufweisen, auf die festen Mittel aufgebracht werden.

2. Verfahren nach Anspruch 1 **dadurch gekennzeichnet, daß** wäßrige Dispersionen eingesetzt werden.

3. Verfahren nach einem der Ansprüche 1 oder 2 **dadurch gekennzeichnet, daß** die eingesetzten Dispersionen 20 Gew.-% bis 90 Gew.-% Wasser und 10 Gew.-% bis 80 Gew.-% Polymere, die Urethan- und Harnstoffgruppen aufweisen, enthalten.

4. Verfahren nach einem der Ansprüche 1 bis 3 **dadurch gekennzeichnet, daß** Polymere auf Basis von Polyesterpolyolen und Isocyanaten eingesetzt werden.

5. Verfahren nach einem der Ansprüche 1 bis 4 **dadurch gekennzeichnet, daß** Polymere auf Basis von aliphatischen Isocyanaten eingesetzt werden.

6. Verfahren nach einem der Ansprüche 1 bis 5 **dadurch gekennzeichnet, daß** anionische Polymerdispersionen eingesetzt werden.

7. Verfahren nach einem der Ansprüche 1 bis 6 **dadurch gekennzeichnet, daß** Polymerdispersionen eingesetzt werden, die erhältlich sind, indem
a) aus Makroolen, ionisch oder potentiell ionischen Polyolen und überschüssigen Polyisocyanaten ein NCO-terminiertes Präpolymer hergestellt wird,
b) dieses Prepolymer mit Verbindungen, die mindestens 2 gegenüber Isocyanat reaktive Aminogruppen aufweisen, in einem Verhältnis NCO-Gruppen/NH-Gruppen von ≤ 1:1 umgesetzt und
c) neutralisiert wird.

8. Verfahren nach Anspruch 7 **dadurch gekennzeichnet, daß** in Schritt a) zusätzlich kurzkettige Polyole eingesetzt werden.

9. Verfahren nach Anspruch 7 oder 8 **dadurch gekennzeichnet, daß** als ionische oder potentiell ionische Polyole 2,2-Di-(hydroxymethyl)-alkanmonocarbonsäuren eingesetzt werden.

10. Verfahren nach Anspruch 1 - 9 **dadurch gekennzeichnet, daß** als ionische oder potentiell ionisches Polyol Di-(hydroxymethyl)-propionsäure eingesetzt wird.

11. Verfahren nach einem der Ansprüche 1 bis 10 **dadurch gekennzeichnet, daß** zur Umsetzung mit dem Prepolymer Diamine eingesetzt werden.

12. Verfahren nach einem der Ansprüche 1 bis 11 **dadurch gekennzeichnet, daß** in dem Prepolymer das Verhältnis NCO/NH funktionell zwischen 0,9:1 und 1:1 liegt.

13. Verfahren nach einem der Ansprüche 1 bis 12 **dadurch gekennzeichnet, daß** das Verhältnis NCO/NH - funktionell zwischen 0,95:1 und 1:1 liegt.

14. Verfahren nach einem der Ansprüche 1 bis 13 **dadurch gekennzeichnet, daß** zur Neutralisierung Ammoniak eingesetzt wird.

15. Verfahren nach einem der Ansprüche 1 bis 14 **dadurch gekennzeichnet, daß** die Polymerdispersionen, die weitere Dispersionen, Hilfsstoffe, Wirkstoffe, Spurenelemente oder Gemische dieser Stoffe enthalten, eingesetzt werdem.

16. Festes, Nährstoffe für Pflanzen enthaltendes Mittel mit einer biologisch abbaubaren Polymerbeschichtung, hergestellt in einem Verfahren nach einem der Ansprüche 1 bis 15.

17. Mittel nach Anspruch 16 **dadurch gekennzeichnet, daß** es in Granulatform vorliegt.

18. Mittel nach Anspruch 17 **dadurch gekennzeichnet, daß** der mittlere Durchmesser der Granulate 0,5 bis 10 mm beträgt.

19. Mittel nach einem der Ansprüche 17 oder 18 **dadurch gekennzeichnet, daß** der mittlere Durchmesser ungefähr 0,7 bis 5 mm beträgt.

20. Mittel nach einem der Ansprüche 17 bis 19 **dadurch gekennzeichnet, daß** das Schüttgewicht der Granulate zwischen 0,5 bis 1,5 kg pro Liter liegt.

21. Verwendung der Mittel nach einem Ansprüche 17 bis 20 als Düngemittel.
